# EUROPEAN PATENT SPECIFICATION

(11) **EP 3 634 049 B1**
(45) Date of publication and mention of the grant of the patent: **10.04.2024**
(21) Application number: 18825024.5
(22) Date of filing: 29.06.2018
(51) Int. Cl.: H04W 56/00, H04L 27/00, H04L 5/00

(54) **SYNCHRONIZATION METHOD AND APPARATUS**
SYNCHRONISATIONSVERFAHREN UND -VORRICHTUNG
PROCÉDÉ ET APPAREIL DE SYNCHRONISATION

(30) Priority: 30.06.2017 CN 201710526449
(43) Date of publication of application: 08.04.2020
(73) Proprietor: Huawei Technologies Co., Ltd., Longgang District Shenzhen, Guangdong 518129 (CN)
(72) Inventor: LIU, Zhe, Shenzhen Guangdong 518129 (CN); TANG, Hao, Shenzhen Guangdong 518129 (CN); WANG, Fan, Shenzhen Guangdong 518129 (CN); ZHOU, Guohua, Shenzhen Guangdong 518129 (CN)
(74) Representative: Körber, Martin Hans
(86) International application number: PCT/CN2018/093849
(87) International publication number: WO 2019/001583

(56) References cited:
- WO-A1-2016/123790
- WO-A1-2016/126136
- WO-A1-2017/050868
- WO-A2-2014/018333
- CN-A- 101 867 386
- CN-A- 105 515 743
- CN-A- 106 856 670
- US-A1- 2017 142 703

## Description

### TECHNICAL FIELD

This application relates to the field of wireless communications technologies, and in particular, to a synchronization method and an apparatus.

### BACKGROUND

In a wireless communications system, a terminal and a network transmit data to each other based on a radio (radio) communications technology. However, before data transmission, the terminal usually needs to be first connected to the network to establish a connection (connection) to the network.

Generally, the connection between the terminal and the network may be briefly referred to as a link (link). Two endpoints of a link are respectively used to represent two devices that are respectively configured to receive and transmit data. One endpoint represents a device that enjoys a network service, for example, a terminal; and the other endpoint represents a device that provides the network service, for example, a base station. A connection line between the two endpoints is used to represent a data transmission path. Based on a data transmission direction, the link is further divided into an uplink (uplink, UL) and a downlink (downlink, DL).

To use a frequency resource properly and efficiently, the international telecommunication union (International Telecommunication Union, ITU) formulates a radio regulation (Radio Regulations). The regulation has a strict stipulation on both allocation (allocation) of a radio frequency band (frequency band), and assignment (assignment) and use of a frequency channel (frequency channel). Currently, a 4G LTE operating band (operating band) has been stipulated in a technical specification of a third generation partnership project (Third Generation Partnership Project, 3GPP). A technical specification of the fifth generation (the 5th generation, 5G) mobile communications system are being studied and formulated. Currently, a candidate licensed spectrum of 5G NR includes a high frequency band ranging from 24.25 GHz to 86 GHz.

However, signal attenuation on the high frequency band is relatively serious. If the 5G NR supports operating only on the high frequency band, network coverage may be a problem. In addition, considering scarcity of the frequency resource, the 5G NR should also support operating on a licensed spectrum of 4G LTE. In other words, the 5G NR and the 4G LTE share the licensed spectrum of the 4G LTE. This is referred to as NR-LTE co-existence (NR-LTE Co-existence) in a study project of the 3GPP. That the 5G NR uses the licensed spectrum of the 4G LTE not only enhances a coverage capability of a 5G network, but also improves resource utilization of a 4G licensed spectrum. In addition, because some operators may have only the 4G licensed spectrum, the NR-LTE co-existence is significant for early commercial use of the 5G network. However, the NR-LTE co-existence is now still a study framework, and a specific technical solution still needs deeper exploration and study.

Document WO 2014/018333 A2 discloses frequency and timing synchronization in UL-only mode or D2D mode. In particular, a synchronization sequence is sent by UE in a periodic fashion so that the eNodeB compares with its own local frequency reference and sends feedback to the UE to readjust the frequency. Moreover, a synchronization procedure for UL sync and feedback is disclosed. In particular, the UE transmits a synchronization sequence on a UL-only cell, and the eNodeB receives the synchronization sequence and compute a frequency offset for the UE to apply.

### SUMMARY

This application provides a synchronization method, to resolve a technical problem of how a terminal implements frequency synchronization with a supplementary uplink resource. The invention is defined by the claims.

According to a first aspect, this application provides a synchronization method, and the method includes:
sending, by a terminal, a first uplink signal to a network device on a supplementary uplink resource;
receiving, by the terminal, indication information from the network device, where the indication information is used to indicate a frequency offset value of the supplementary uplink resource; and
determining, by the terminal, the frequency offset value of the supplementary uplink resource based on the indication information, to implement frequency synchronization with the supplementary uplink resource.

Further, the indication information is a frequency offset indicator value; and
the determining, by the terminal, the frequency offset value of the supplementary uplink resource based on the indication information includes:
obtaining, by the terminal, frequency offset precision; and
determining, by the terminal, the frequency offset value of the supplementary uplink resource based on the frequency offset precision and the frequency offset indicator value. The frequency offset value is a product of the frequency offset precision and the frequency offset indicator value

In this way, the terminal sends the first uplink signal to the network device on the supplementary uplink resource, and receives the indication information returned by the network device, so that the terminal can implement the frequency synchronization with the supplementary uplink resource based on the frequency offset value indicated by the indication information. To be specific, the terminal in this application implements the frequency synchronization with the supplementary uplink resource based on the indication information sent by the network device, and does not totally rely on a synchronization signal received on a downlink resource. In this case, when the synchronization method in this application is applied to an NR-LTE co-existence case, an NR terminal can implement frequency synchronization with the supplementary uplink resource based on the indication information, so that uplink signals of different terminals are orthogonal to each other in frequency domain, and do not interfere with each other, and uplink transmission performance of an LTE terminal on an LTE uplink resource is not affected. An uplink resource in the LTE uplink resource shared for NR transmission is referred to as a supplementary uplink resource of NR.

In a possible design, the first uplink signal is a random access signal; and
the receiving, by the terminal, indication information from the network device includes:
receiving, by the terminal, a random access response RAR from the network device, where the RAR includes the indication information.

In a possible design, the first uplink signal is an uplink reference signal; and
the receiving, by the terminal, indication information from the network device includes:
receiving, by the terminal, downlink control information from the network device, where the downlink control information includes the indication information.

In this application, the obtaining, by the terminal, frequency offset precision includes:
receiving, by the terminal, a system broadcast message or RRC signaling sent by the network device, where the system broadcast message or the RRC signaling includes the carrier frequency offset precision.

In this application, the terminal obtains the plurality of preset carrier frequency offset values in the following manner:
receiving, by the terminal, the system broadcast message or the RRC signaling sent by the network device, where the system broadcast message or the RRC signaling includes the plurality of preset carrier frequency offset values.

In a possible design, after the determining, by the terminal, the frequency offset value of the supplementary uplink resource based on the indication information, the method further includes:
performing, by the terminal, frequency adjustment on the supplementary uplink resource by using the frequency offset value, and sending a second uplink signal on the adjusted supplementary uplink resource; or
performing, by the terminal, frequency domain precompensation on a second uplink signal by using the frequency offset value, and sending a frequency domain signal on the supplementary uplink resource.

In a possible design, the supplementary uplink resource belongs to a licensed spectrum of a long term evolution LTE system.

In a possible design, the terminal operates on the supplementary uplink resource by using a radio access technology of a non-LTE system.

According to a second aspect, this application provides a synchronization method, and the method includes:
receiving, by a network device, a first uplink signal from a terminal on a supplementary uplink resource; and
sending, by the network device, indication information to the terminal based on the first uplink signal, where the indication information is used to indicate a frequency offset value of the supplementary uplink resource.

Further, the indication information is a frequency offset indicator value. The method further comprises: sending, by the network device, frequency offset precision to the terminal.

In this way, after receiving the first uplink signal from the terminal on the supplementary uplink resource, the network device sends the indication information to the terminal to indicate the frequency offset value of the supplementary uplink resource, so that the terminal can implement frequency synchronization with the supplementary uplink resource based on the frequency offset value. In addition, the network device may determine the frequency offset value of the supplementary uplink resource based on the first uplink signal sent by the terminal, so that the frequency offset value of the supplementary uplink resource is relatively proper, and this can effectively ensure that the terminal implements the frequency synchronization with the supplementary uplink resource.

In a possible design, the first uplink signal is a random access signal; and
the sending, by the network device, indication information to the terminal includes:
sending, by the network device, a random access response RAR to the terminal, where the RAR includes the indication information.

In a possible design, the first uplink signal is an uplink reference signal; and
the sending, by the network device, indication information to the terminal includes:
sending, by the network device, downlink control information to the terminal device, where the downlink control information includes the indication information.

This application further provides a computer readable storage medium. The storage medium stores an instruction, and when the instruction is run on a computer, the computer is enabled to perform the communication method provided in any one of the foregoing designs.

### BRIEF DESCRIPTION OF DRAWINGS

FIG. 1 is a schematic diagram of a system architecture to which this application is applicable;
FIG. 2a is a schematic diagram of a possible scenario according to this application;
FIG. 2b is a schematic diagram of another possible scenario according to this application;
FIG. 3 is a schematic flowchart corresponding to Scenario 1 according to this application;
FIG. 4a is a schematic structural diagram of an RAR MAC PDU according to this application;
FIG. 4b is a schematic diagram of a MAC PDU including one or more RARs according to this application;
FIG. 5 is a schematic flowchart corresponding to Scenario 2 according to this application;
FIG. 6 is a schematic flowchart corresponding to Scenario 3 according to this application;
FIG. 7 is a schematic structural diagram of a first communications entity according to this application;
FIG. 8 is a schematic structural diagram of a second communications entity according to this application;
FIG. 9 is a schematic structural diagram of a third communications entity according to this application; and
FIG. 10 is a schematic structural diagram of a fourth communications entity according to this application.

### DESCRIPTION OF EMBODIMENTS

The following describes this application in detail with reference to the accompanying drawings in the specification.

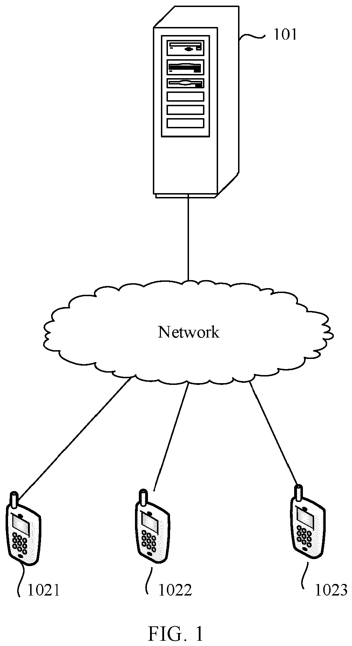

FIG. 1 is a schematic diagram of a system architecture to which this application is applicable. As shown in FIG. 1, the system architecture includes a network device 101 and one or more terminals, such as a terminal 1021, a terminal 1022, and a terminal 1023 shown in FIG. 1. The network device 101 may transmit downlink data to the terminal 1021, the terminal 1022, and the terminal 1023 through a network, and the terminal 1021, the terminal 1022, and the terminal 1023 may transmit uplink data to the network device 101 through the network.

In this application, the network device may be a base station (base station, BS) device. The base station device may also be referred to as a base station, and is an apparatus deployed in a radio access network to provide a wireless communication function. For example, a device providing a base station function in a 2G network includes a base wireless transceiver station (base transceiver station, BTS) and a base station controller (base station controller, BSC). A device providing a base station function in a 3G network includes a NodeB (NodeB) and a radio network controller (radio network controller, RNC). A device providing a base station function in a 4G network includes an evolved NodeB (evolved NodeB, eNB). A device providing a base station function in a 5G network includes a new radio NodeB (New Radio NodeB, gNB), a centralized unit (Centralized Unit, CU), a distributed unit (Distributed Unit), and a new radio controller.

The terminal may be a device (device) providing voice and/or data connectivity for a user, and includes a wired terminal and a wireless terminal. The wireless terminal may be a handheld device with a wireless connection function, another processing device connected to a wireless modem, or a mobile terminal that communicates with one or more core networks by using a radio access network. For example, the wireless terminal may be a mobile phone, a computer, a tablet, a personal digital assistant (personal digital assistant, PDA), a mobile Internet device (mobile Internet device, MID), a wearable device, or an e-book reader (e-book reader). For another example, the wireless terminal may alternatively be a portable, pocket-sized, handheld, computer built-in, or vehicle-mounted mobile device. For still another example, the wireless terminal may be a part of a mobile station (mobile station), an access point (access point), or user equipment (user equipment, UE).

In this application, the system architecture shown in FIG. 1 is mainly used as an example for description, but is not limited thereto. For example, this application may be alternatively applicable to a system architecture in which a macro base station communicates with a micro base station. This is not specifically limited.

A communications system to which the foregoing system architecture is applicable includes but is not limited to time division duplex - long term evolution (Time Division Duplexing - Long Term Evolution, TDD LTE), frequency division duplex - long term evolution (Frequency Division Duplexing - Long Term Evolution, FDD LTE), long term evolution advanced (Long Term Evolution-Advanced, LTEadvanced), and various future evolved wireless communications systems (for example, a 5G NR system). The 5G NR system is used as an example. Currently, a candidate licensed spectrum of NR includes a high frequency band ranging from 24.25 GHz to 86 GHz, which is far higher than an operating band of LTE. To enhance a coverage capability of an NR network and improve resource utilization of an LTE licensed spectrum, NR and LTE share the LTE licensed spectrum.

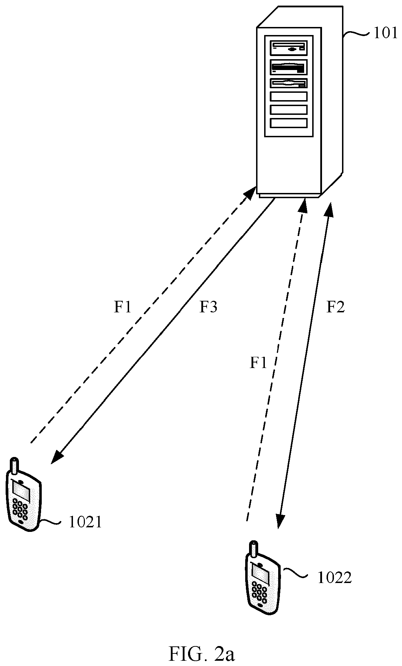

In a possible scenario, as shown in FIG. 2a, the terminal 1021 uses an FDD communication mode, and the terminal 1022 uses a TDD communication mode. A carrier F1 and a carrier F3 belong to the LTE licensed spectrum. The terminal 1021 transmits uplink data by using the carrier F1, and the network device 101 transmits downlink data by using the carrier F3. A carrier F2 belongs to an NR licensed spectrum. The terminal 1022 performs a downlink resource transmission by using a downlink timeslot of the carrier F2, and may transmit an uplink resource by using the carrier F1, or may performs an uplink resource transmission by using an uplink timeslot of the carrier F2, or may perform uplink transmission by using uplink resources of both the carrier F1 and the carrier F2. When the terminal 1022 perform an uplink resource transmission by using the carrier F1, uplink transmission performed by the terminal 1021 and the uplink transmission performed by the terminal 1022 share the uplink carrier F 1. The terminal 1021 operates on the uplink carrier F1 by using a radio access technology of an LTE system. In other words, the terminal 1021 transmits LTE uplink data by using the uplink carrier F1. The terminal 1022 operates on the uplink carrier F1 by using a radio access technology of an NR system. In other words, the terminal 1022 transmits NR uplink data by using the uplink carrier F1. However, before transmitting the NR uplink data by using the uplink carrier F1, the terminal 1022 needs to implement frequency synchronization with the uplink carrier F 1. Otherwise, the uplink transmission performed by the terminal 1022 on the uplink carrier F1 and the uplink transmission performed by the terminal 1021 on the uplink carrier F1 are not orthogonal in frequency domain, causing interference and performance losses of the terminal 1021 and the terminal 1022.

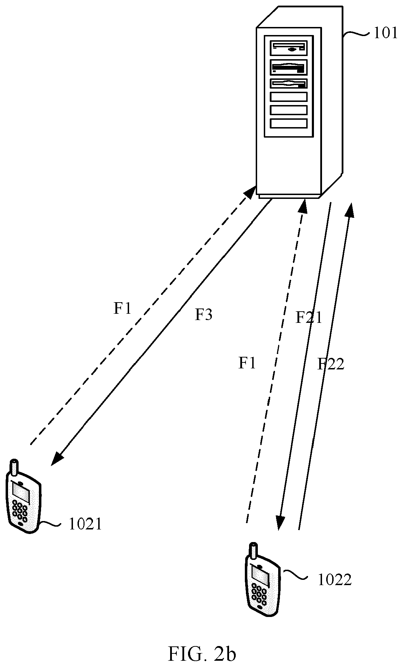

In another possible scenario, as shown in FIG. 2b, both the terminal 1021 and the terminal 1022 use an FDD communication mode. The carrier F1 and The carrier F3 belong to the LTE licensed spectrum. The terminal 1021 transmits uplink data by using the carrier F1, and transmits downlink data by using the carrier F3. A carrier F21 and A carrier F22 belong to the NR licensed spectrum. The terminal 1022 performs a downlink resource transmission by using the carrier F21, and may perform an uplink resource transmission by using the carrier F1 and/or the carrier F22. When the terminal 1022 performs the uplink resource transmission by using the carrier F1, the uplink transmission performed by the terminal 1021 and the uplink transmission performed by the terminal 1022 share the uplink carrier F1. Similarly, before transmitting NR uplink data by using the uplink carrier F1, the terminal 1022 needs to implement frequency synchronization with the uplink carrier F 1.

In the foregoing scenarios, for the terminal 1022, the uplink carrier F1 shared by the terminal 1021 and the terminal 1022 for the uplink transmission is a supplementary uplink (supplementary uplink, SUL) resource. Specifically, the supplementary uplink resource may be a supplementary uplink carrier or a supplementary uplink frequency, and the SUL means that only an uplink resource is used for transmission in a current standard. For example, in the 5G NR system, if a carrier A is used only for uplink transmission in NR and is not used for downlink transmission, or is used for downlink transmission in a long term evolution (long term evolution, LTE) communications system and is not used for downlink transmission in NR, the carrier A is a supplementary uplink resource.

Based on this, this application provides a communication method, to resolve a technical problem of how a terminal implements frequency synchronization with a supplementary uplink resource.

Specifically, the terminal sends a first uplink signal on the supplementary uplink resource. Correspondingly, a network device receives the first uplink signal, and sends indication information to the terminal. The indication information indicates a frequency offset value of the supplementary uplink resource. Correspondingly, the terminal receives the indication information, and determines the frequency offset value of the supplementary uplink resource based on the indication information, to implement frequency synchronization with the supplementary uplink resource. To be specific, the terminal in this application implements the frequency synchronization with the supplementary uplink resource based on the indication information sent by the network device, and does not totally rely on a synchronization signal received on a downlink resource. In this case, when the synchronization method in this application is applied to an NR-LTE co-existence case, an NR terminal can implement frequency synchronization with the supplementary uplink resource based on the indication information, so that uplink signals of different terminals are orthogonal to each other in frequency domain, and do not interfere with each other, and uplink transmission performance of an LTE terminal on the supplementary uplink resource is not affected. It should be noted that, in addition to the NR-LTE co-existence case, the synchronization method in this application may also be applied to another case in which there is a supplementary uplink resource. This is not specifically limited.

Further, the synchronization method in this application may be applied to a plurality of application scenarios. For example, the synchronization method may be independently applied to a random access process, so that a terminal can implement frequency synchronization with the supplementary uplink resource. Alternatively, the synchronization method may also be independently applied to a synchronization tracking process after the random access process, to ensure frequency synchronization between the terminal and the supplementary uplink resource. Alternatively, the synchronization method may not only be applied to the random access process, but also applied to the synchronization tracking process after the random access process. The following separately describes the three possible application scenarios in detail.
(1) Scenario 1: The synchronization method is applied to the random access process.

In this scenario, the first uplink signal may be a random access signal.

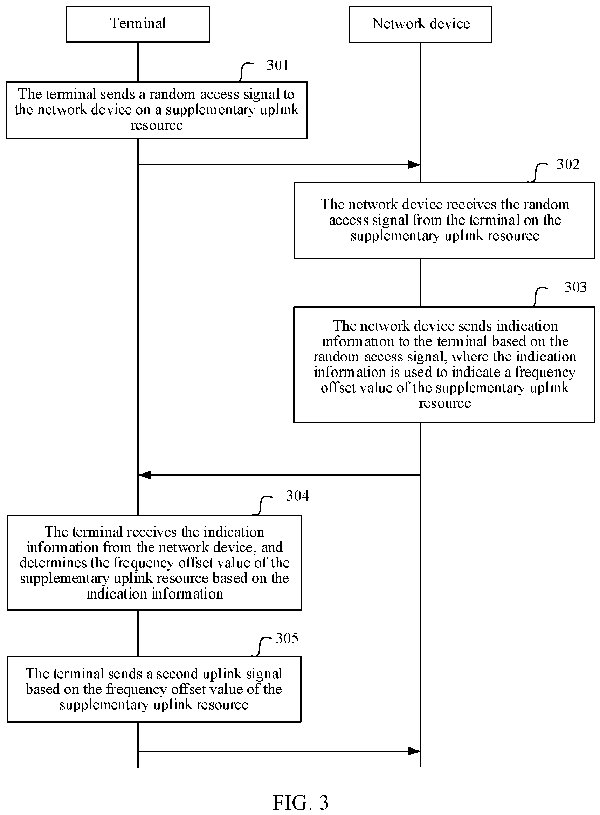

FIG. 3 is a schematic flowchart corresponding to Scenario 1. As shown in FIG. 3, a synchronization method includes the following steps.

Step 301: A terminal sends a random access signal to a network device on a supplementary uplink resource.

Herein, the random access signal may be a random access preamble. After performing a cell search process, the terminal implements downlink synchronization with a cell. Therefore, the terminal can receive downlink data. To perform uplink transmission, the terminal needs to send the random access preamble to the network device.

Step 302: The network device receives the random access signal from the terminal on the supplementary uplink resource.

Step 303: The network device sends indication information to the terminal based on the random access signal, where the indication information is used to indicate a frequency offset value of the supplementary uplink resource.

Herein, the network device may send a random access response (random access response, RAR) to the terminal, and the RAR includes the indication information. Alternatively, the network device may send the indication information by using other signaling. This is not specifically limited.

In this application, the indication information may be a plurality of types of information used to indicate the frequency offset value of the supplementary uplink resource. For example, the indication information may be a frequency offset value of the supplementary uplink resource, or may be a frequency offset indicator value of the supplementary uplink resource, or may be a frequency offset index value of the supplementary uplink resource. This is not specifically limited in this application.

After receiving the random access signal, the network device may directly estimate the frequency offset value of the supplementary uplink resource based on the random access signal, or may directly obtain a frequency offset indicator value or a frequency offset index value of the supplementary uplink resource based on the random access signal. Alternatively, after estimating the frequency offset value of the supplementary uplink resource based on the random access signal, the network device may obtain the frequency offset indicator value or the frequency offset index value based on the frequency offset value. The network device may estimate the frequency offset value of the uplink resource based on the random access signal by using a plurality of frequency offset estimation algorithms. Similarly, the network device may also obtain the frequency offset indicator value or the frequency offset index value in a plurality of manners. This is not specifically limited in this application.

Step 304: The terminal receives the indication information from the network device, and determines the frequency offset value of the supplementary uplink resource based on the indication information, to implement frequency synchronization with the supplementary uplink resource.

In this application, there may be a plurality of types of indication information sent by the network device. Therefore, correspondingly, there may be a plurality of manners in which the terminal determines the frequency offset value of the supplementary uplink resource based on the indication information. The following specifically describes several possible implementations.

### Manner 1:

The indication information sent by the network device to the terminal is the frequency offset indicator value of the supplementary uplink resource. In this case, the terminal may determine the frequency offset value based on the frequency offset indicator value and frequency offset precision.

In this application, the frequency offset precision is set by the network device and sent to the terminal, possibly by using a system broadcast message or RRC signaling. Alternatively, the frequency offset precision may be obtained by the terminal based on a subcarrier spacing of the random access preamble.

The frequency offset indicator value of the supplementary uplink resource may be sent by the network device to the terminal by using a carrier frequency offset (carrier frequency offset, CFO) field added to the RAR. A value indicated by the CFO field is the frequency offset indicator value of the supplementary uplink resource.

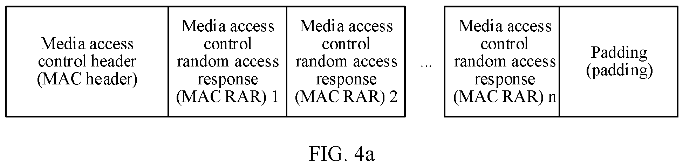

Specifically, currently, a plurality of RARs in LTE constitute one media access control (media access control, MAC) protocol data unit (protocol data unit, PDU). FIG. 4a is a schematic structural diagram of an RAR MAC PDU. As shown in FIG. 4a, the RAR MAC PDU includes one MAC header (MAC header), zero or a plurality of MAC RARs, and padding(optional existing). It can be learned from a structure of the RAR MAC PDU that, if the network device detects random access requests from a plurality of terminals on a same physical random access channel (physical random access channel, PRACH) resource, a response can be made to these random access requests by using only one RAR MAC PDU, and a response to each random access request (corresponding to one preamble index) corresponds to one RAR. In other words, if the plurality of terminals send random access preambles on a same PRACH resource (time-frequency locations are the same), corresponding RARs are multiplexed in a same RAR MAC PDU.

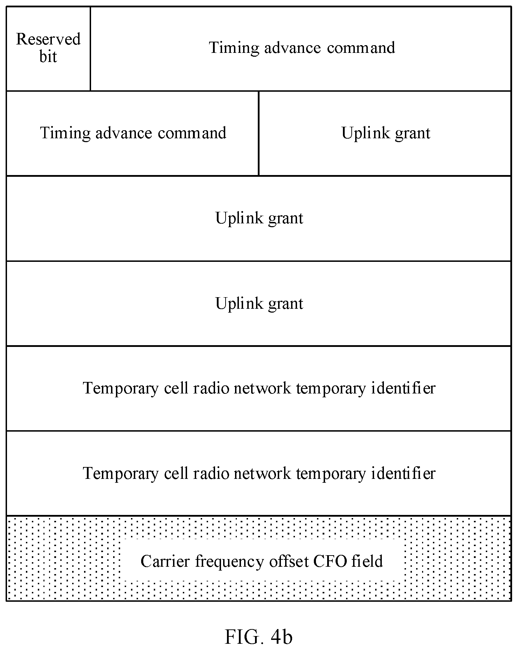

FIG. 4b is a schematic diagram of a MAC PDU including one or more RARs. As shown in FIG. 4b, the MAC PDU includes a reserved bit, an 11-bit timing advance command (Timing advance command) that is used to specify a time adjustment amount required for uplink synchronization of UE, a 20-bit uplink grant (UL grant) that is used to specify an uplink resource allocated to a third message (Msg3), and a 16-bit temporary cell radio network temporary identifier (temporary cell radio network temporary identifier, TC-RNTI) that is used for subsequent transmission between a terminal and a network device. After a conflict is resolved, the value may become a C-RNTI.

In this application, a CFO field may be added to the RAR. As shown in FIG. 4b, a quantity of bits included in the CFO field may be predefined, for example, 8bits, 16bits, 24bits, or more bits.

Further, a first bit in the CFO field may be set to a sign-bit. For example, if the first bit is 0, it indicates that the frequency offset value is negative, to be specific, a frequency of the supplementary uplink resource is greater than a frequency that a base station expects to receive. If the first bit is 1, it indicates that the frequency offset value is positive, to be specific, the frequency of the supplementary uplink resource is less than the frequency that the base station expects to receive.

For example, the frequency offset precision received by the terminal by using the system broadcast message is 10 Hz, the CFO field in the RAR includes 16bit, the first bit is a sign-bit, and a value indicated by the CFO field is 1000000000000011. Therefore, the terminal may learn, based on the frequency offset precision and a frequency offset indicator value, that a frequency offset value is 10 Hz x 3 = 30 Hz.

It can be learned that a range of a frequency offset value indicated by the CFO field is determined by using a predefined quantity of bits of the CFO field and predefined frequency offset precision. If the frequency offset precision is 10 Hz, and the CFO field includes 16bit, the range of the frequency offset value indicated by the CFO field is from -327680 Hz to 327670 Hz. If the frequency offset precision is 10 Hz, and the CFO field includes 8bit, the range of the frequency offset value indicated by the CFO field is from -1280 Hz to 1270 Hz. To be specific, if the CFO field includes N bits, and 1 bit is used to indicate a sign-bit, an indication range is from [-2^{N-1} to (2^{N-1} - 1)] x 10 Hz.

Further, in this application, it may be further set that the CFO field including N bits includes X bit used to indicate an integer-multiple frequency offset and Y bit used to indicate a fraction-multiple frequency offset, and X + Y + 1 = N (1 bit is a sign-bit). The network device may send, to the terminal by using a system broadcast message, a quantity of bits with an integer-multiple frequency offset or a fraction-multiple frequency offset in the CFO field. If a subcarrier spacing of a random access preamble sent by the terminal is marked as S, it may be learned that frequency offset precision is S (to be specific, the subcarrier spacing of the random access preamble is the same as the frequency offset precision). Further, the frequency offset value of the supplementary uplink resource is obtained based on a value indicated by the CFO field. In this case, the range of the frequency offset value indicated by the CFO field is from [-2^{N-1} to (2^{N-1}- 1)] x S/2^{Y}.

### Manner 2:

The indication information sent by the network device to the terminal is the frequency offset index value of the supplementary uplink resource. In this case, the terminal may select, from a plurality of preset frequency offset values based on the frequency offset index value, a frequency offset value corresponding to the frequency offset index value as the frequency offset value of the supplementary uplink resource.

In this application, the plurality of preset frequency offset values may be predefined and stored in the terminal. Alternatively, the plurality of preset frequency offset values may be set by the network device and sent to the terminal by using a system broadcast message or RRC signaling. This is not specifically limited.

The frequency offset index value of the supplementary uplink resource may be sent by the network device to the terminal by using the CFO field, and the value indicated by the CFO field is the frequency offset index value of the supplementary uplink resource. For content of adding the CFO field to the RAR, refer to the description in Manner 1. Details are not described herein again. Because a quantity of preset frequency offset values is usually limited, a quantity of bits included in the CFO field may be relatively small (in comparison with Manner 1). For example, if there are eight preset frequency offset values, a range of the frequency offset index value only needs to be from 0 to 7. Correspondingly, the CFO field needs to include only 3 bits.

Step 305: The terminal sends a second uplink signal based on the frequency offset value of the supplementary uplink resource, where the second uplink signal may be any one of an uplink shared data channel, an uplink reference signal, an uplink control signal, and a random access signal.

Herein, the terminal may perform frequency adjustment on the supplementary uplink resource by using the frequency offset value, and send the second uplink signal on the adjusted supplementary uplink resource. Alternatively, the terminal may perform frequency domain precompensation on the second uplink signal by using the frequency offset value, and send a frequency domain signal on the supplementary uplink resource. Every moment at which the frequency domain precompensation is performed on the second uplink signal, the second uplink signal is multiplied by a phase offset, and the phase offset is the frequency offset value of the supplementary uplink resource.

(2) Scenario 2: The synchronization method is applied to the synchronization tracking process after a random access process.

In this scenario, the first uplink signal may be an uplink reference signal.

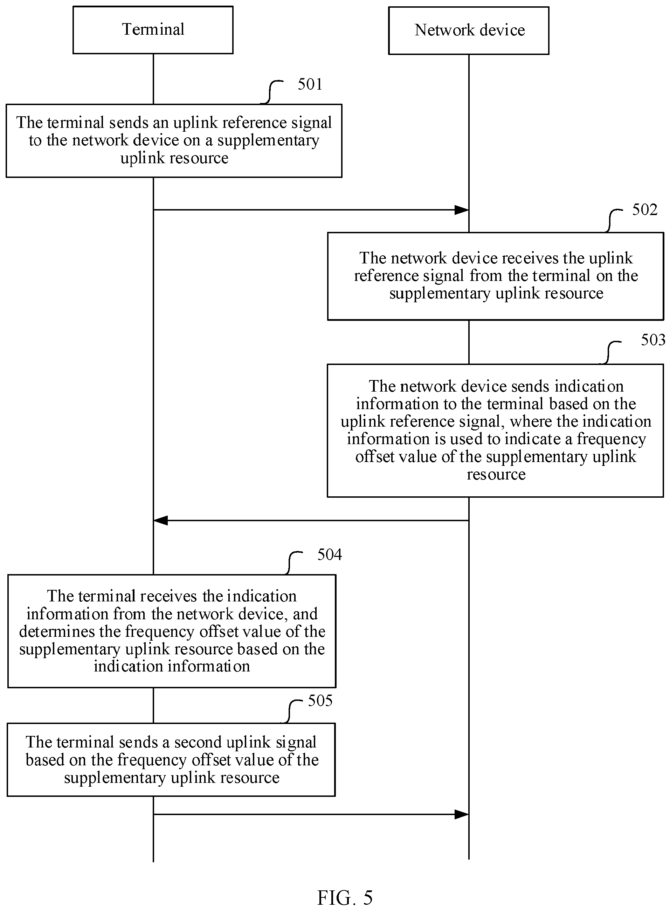

FIG. 5 is a schematic flowchart corresponding to Scenario 2. As shown in FIG. 5, a synchronization method includes the following steps.

Step 501: A terminal sends an uplink reference signal to a network device on a supplementary uplink resource.

Herein, the uplink reference signal may be an uplink demodulation reference signal (demodulation reference signal, DMRS) or an uplink sounding reference signal (sounding reference signal, SRS).

Step 502: The network device receives the uplink reference signal from the terminal on the supplementary uplink resource.

Step 503: The network device sends indication information to the terminal based on the uplink reference signal, where the indication information is used to indicate a frequency offset value of the supplementary uplink resource.

Herein, the network device may send the indication information to the terminal in a plurality of manners. For example, the network device sends downlink control information (downlink control information, DCI) to the terminal, and the downlink control information includes the indication information. Alternatively, the network device sends a MAC layer control element (MAC Control Element, MAC CE) or RRC signaling to the terminal, and the MAC CE or the RRC signaling includes the indication information.

In this application, the indication information may be a plurality of types of information used to indicate the frequency offset value of the supplementary uplink resource. For details, refer to the description in Scenario 1.

After receiving the uplink reference signal, the network device may directly estimate the frequency offset value of the supplementary uplink resource based on the uplink reference signal, or may directly obtain a frequency offset indicator value or a frequency offset index value of the supplementary uplink resource based on the uplink reference signal. Alternatively, after estimating the frequency offset value of the supplementary uplink resource based on the uplink reference signal, the network device may obtain the frequency offset indicator value or the frequency offset index value based on the frequency offset value. The network device may estimate the frequency offset value of the uplink resource based on the uplink reference signal by using a plurality of frequency offset estimation algorithms. Similarly, the network device may also obtain the frequency offset indicator value or the frequency offset index value in a plurality of manners. This is not specifically limited in this application.

Step 504: The terminal receives the indication information from the network device, and determines the frequency offset value of the supplementary uplink resource based on the indication information, to implement frequency synchronization with the supplementary uplink resource.

There may be a plurality of manners in which the terminal determines the frequency offset value of the supplementary uplink resource based on the indication information. For details, refer to the description in Scenario 1.

Step 505: The terminal sends a second uplink signal based on the frequency offset value of the supplementary uplink resource, where the second uplink signal may be any one of an uplink shared data channel, an uplink reference signal, and an uplink control signal.

In this application, a difference between Scenario 2 and Scenario 1 is as follows: In Scenario 1, the terminal sends the random access signal, and the network device sends the indication information to the terminal based on the random access signal. The indication information may be sent to the terminal by using the RAR. In other words, the frequency offset indicator value or the frequency offset index value may be sent to the terminal by using the CFO field that is added to the RAR. However, in Scenario 2, the terminal sends the uplink reference signal, and the network device sends the indication information to the terminal based on the uplink reference signal. The indication information may be sent to the terminal by using the DCI. In other words, the frequency offset indicator value or the frequency offset index value may be sent to the terminal by using the DCI.

For other content in Scenario 2, refer to the description in Scenario 1. Details are not described again.

(3) The synchronization method is applied to the random access process and the synchronization tracking process after the random access process.

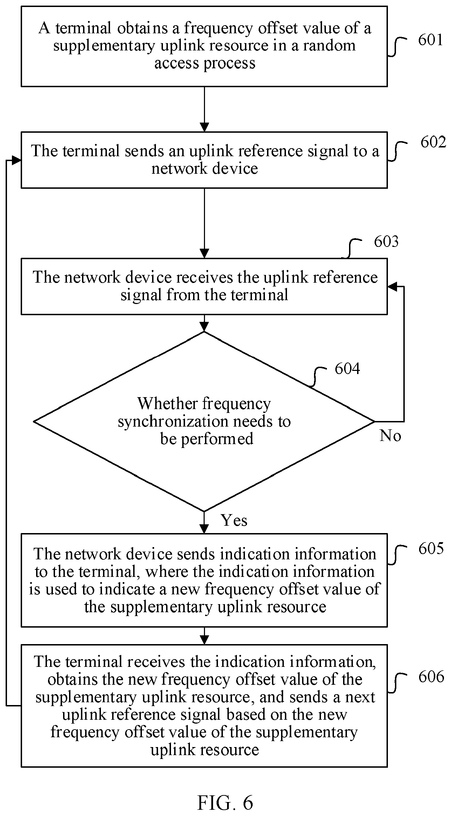

In this scenario, Scenario 1 and Scenario 2 are combined, and this scenario may be specifically as follows: The step procedures described in Scenario 1 are first performed, and then the step procedures described in Scenario 2 are cyclically performed. FIG. 6 is a schematic flowchart corresponding to Scenario 3. Specific description is provided in the following with reference to FIG. 6. As shown in FIG. 6, a synchronization method includes the following steps.

Step 601: A terminal obtains a frequency offset value of a supplementary uplink resource in the random access process, to implement frequency synchronization with the supplementary uplink resource. For details, refer to the description in Scenario 1.

Step 602: The terminal sends an uplink reference signal to a network device.

Herein, the terminal may send the uplink reference signal based on the frequency offset value of the supplementary uplink resource obtained in step 601.

Step 603: The network device receives the uplink reference signal from the terminal.

Step 604: The network device determines, based on the received uplink reference signal, whether frequency synchronization needs to be performed. If the frequency synchronization needs to be performed, performs step 605; otherwise, performs step 603.

Herein, in a possible implementation, after receiving the uplink reference signal, the network device may estimate the frequency offset value of the supplementary uplink resource based on the uplink reference signal, and determine whether the frequency offset value is greater than or equal to an offset threshold. If the frequency offset value is greater than or equal to the offset threshold, the network device determines that frequency synchronization needs to be performed; and if the frequency offset value is less than the offset threshold, the network device determines that frequency synchronization does not need to be performed. The offset threshold may be set by a person skilled in the art based on an actual situation. This is not specifically limited.

Step 605: The network device sends indication information to the terminal, where the indication information is used to indicate a new frequency offset value of the supplementary uplink resource.

Step 606: The terminal receives the indication information, obtains the new frequency offset value of the supplementary uplink resource, and sends a next uplink reference signal based on the new frequency offset value of the supplementary uplink resource.

It can be learned from the foregoing process that, after implementing frequency synchronization with the supplementary uplink resource in the random access process, the terminal performs uplink transmission with the network device, and the network device performs synchronization tracking based on the uplink reference signal sent by the terminal in an uplink transmission process. If the network device determines, based on the uplink reference signal sent by the terminal, that the frequency offset value of the supplementary uplink resource is greater than or equal to the offset threshold, it indicates that a frequency offset of the supplementary uplink resource is relatively large. This may result in a case in which the network device cannot accurately parse an uplink signal sent by the terminal. In this case, the network device may send, to the terminal, the indication information used to indicate the frequency offset value, so that the terminal performs frequency adjustment on the supplementary uplink resource or performs frequency domain precompensation on a next to-be-sent uplink signal. If the network device determines, based on the uplink reference signal sent by the terminal, that the frequency offset value of the supplementary uplink resource is less than the offset threshold, it indicates that the frequency offset of the supplementary uplink resource is relatively small, and this does not affect accurate parsing performed by the network device on the uplink signal sent by the terminal. In this case, the network device may not need to send, to the terminal, the indication information used to indicate the frequency offset value, so as to reduce signaling overheads and processing resources.

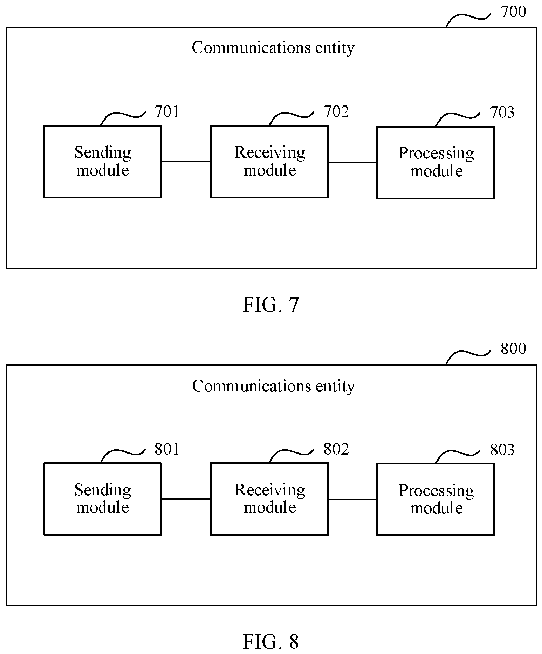

Based on the foregoing embodiments, this application further provides a first communications entity. The communications entity may be a terminal or a chip in a terminal, and the communications entity is configured to perform the step procedures performed by the terminal in the methods shown in FIG. 3, FIG. 5, and FIG. 6. Referring to FIG. 7, the communications entity 700 includes a sending module 701, a receiving module 702, and a processing module 703.

The sending module 701 is configured to send a first uplink signal to a network device on a supplementary uplink resource.

The receiving module 702 is configured to receive indication information from the network device, and the indication information is used to indicate a frequency offset value of the supplementary uplink resource.

The processing module 703 is configured to determine the frequency offset value of the supplementary uplink resource based on the indication information, to implement frequency synchronization with the supplementary uplink resource.

In particular, the indication information is a frequency offset indicator value; and
the processing module 703 is specifically configured to:
obtain frequency offset precision; and
determine the frequency offset value of the supplementary uplink resource based on the frequency offset precision and the frequency offset indicator value.

In a possible design, the first uplink signal is a random access signal; and
the receiving module 702 is specifically configured to:
receive a random access response RAR from the network device, where the RAR includes the indication information.

In a possible design, the first uplink signal is an uplink reference signal; and
the receiving module 702 is specifically configured to:
receive downlink control information from the network device, where the downlink control information includes the indication information.

In a possible design, the sending module 701 is further configured to:
perform frequency adjustment on the supplementary uplink resource by using the frequency offset value, and send a second uplink signal on the adjusted supplementary uplink resource; or
perform frequency domain precompensation on a second uplink signal by using the frequency offset value, and send a frequency domain signal on the supplementary uplink resource.

In a possible design, the supplementary uplink resource belongs to a licensed spectrum of a long term evolution LTE system.

In a possible design, the processing module 703, with the sending module 701, operates on the supplementary uplink resource by using a radio access technology of a non-LTE system.

Based on the foregoing embodiments, this application provides a second communications entity. The communications entity may be a network device or a chip in a network device, and the communications entity is configured to perform the step procedures performed by the network device in the methods shown in FIG. 3, FIG. 5, and FIG. 6. Referring to FIG. 8, the communications entity 800 includes a sending module 801, a receiving module 802, and a processing module 803.

The receiving module 802 is configured to receive a first uplink signal from a terminal on a supplementary uplink resource.

The processing module 803 is configured to generate indication information based on the first uplink signal.

The sending module 801 is configured to send the indication information to the terminal, and the indication information is used to indicate a frequency offset value of the supplementary uplink resource.

In a possible design, the first uplink signal is a random access signal; and
the sending module 801 is specifically configured to:
send a random access response RAR to the terminal, where the RAR includes the indication information.

In a possible design, the first uplink signal is an uplink reference signal; and
the sending module 801 is specifically configured to:
send downlink control information to the terminal, where the downlink control information includes the indication information.

In a possible design, the indication information is a frequency offset indicator value.

In a possible design, the indication information is a frequency offset index value.

In a possible design, the supplementary uplink resource belongs to a licensed spectrum of a long term evolution LTE system.

It should be noted that, in the embodiment of this application, module division is an example, and is merely a logical function division. In actual implementation, there may be another division manner. Functional modules in the embodiment of this application may be integrated into one processing module, or each of the modules may exist alone physically, or two or more modules are integrated into one module. The integrated module may be implemented in a form of hardware, or may be implemented in a form of a software function module.

When the integrated module is implemented in the form of a software functional module and sold or used as an independent product, the integrated module may be stored in a computer readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, or a network device) or a processor (processor) to perform all or some of the steps of the methods described in the embodiments of this application. The foregoing storage medium includes various mediums that can store program code, such as a USB flash drive, a removable hard disk, a read-only memory (Read-Only Memory, ROM), a random access memory (Random Access Memory, RAM), a magnetic disk, and an optical disc.

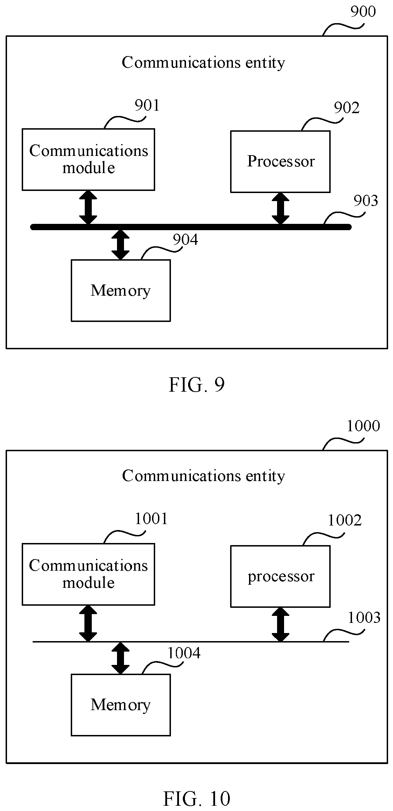

This application further provides a third communications entity, and the communications entity has a function of implementing the communications entity 700 shown in FIG. 7. Referring to FIG. 9, the communications entity 900 includes a communications module 901 and a processor 902.

The communications module 901 is configured to communicate and interact with another device. Specifically, the communications module 901 is configured to send a first uplink signal to a network device on a supplementary uplink resource, and receive indication information from the network device. The indication information is used to indicate a frequency offset value of the supplementary uplink resource, and the communications module 901 may be an RF circuit, a WiFi module, a communications interface, a Bluetooth module, or the like.

The processor 902 is configured to implement a function of the processing module 703 in FIG. 7, for example, determine the frequency offset value of the supplementary uplink resource based on the indication information.

Optionally, the communications entity 900 may further include a memory 904, configured to store a program and the like. Specifically, the program may include program code, and the program code includes an instruction. The memory 904 may include a RAM, and may further include a nonvolatile memory (non-volatile memory), for example, at least one magnetic disk memory. The processor 902 performs an application program stored in the memory 904 to implement the foregoing function.

In a possible manner, the communications module 901, the processor 902, and the memory 904 may be interconnected by using the bus 903. The bus 903 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

This application further provides a fourth communications entity, and the communications entity has a function of implementing the communications entity 800 shown in FIG. 8. Referring to FIG. 10, the communications entity 1000 includes a communications module 1001 and a processor 1002.

The communications module 1001 is configured to communicate and interact with another device. Specifically, the communications module 1001 is configured to receive a first uplink signal from a terminal on a supplementary uplink resource, and send indication information to the terminal based on the first uplink signal. The indication information is used to indicate a frequency offset value of the supplementary uplink resource. The communications module 1001 may be an RF circuit, a WiFi module, a communications interface, a Bluetooth module, or the like.

The processor 1002 is configured to implement a function of the processing module 803 in FIG. 8, for example, generate the frequency offset value of the supplementary uplink resource based on the first uplink signal.

Optionally, the communications apparatus 1000 may further include a memory 1004, configured to store a program and the like. Specifically, the program may include program code, and the program code includes an instruction. The memory 1004 may include a RAM, and may further include a nonvolatile memory (non-volatile memory), for example, at least one magnetic disk memory. The processor 1002 performs an application program stored in the memory 1004 to implement the foregoing function.

In a possible manner, the communications module 1001, the processor 1002, and the memory 1004 may be interconnected by using the bus 1003. The bus 1003 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 10, but this does not mean that there is only one bus or only one type of bus.

All or some of the foregoing embodiments may be implemented by means of software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present invention are all or partially generated. The computer may be a general-purpose computer, a special-purpose computer, a computer network, or another programmable apparatus. The computer instructions may be stored in a computer readable storage medium or may be transmitted from a computer readable storage medium to another computer readable storage medium. For example, the computer instructions may be transmitted from a website, computer, server, or data center to another website, computer, server, or data center wiredly (for example, a coaxial cable, an optical fiber, or a digital subscriber line (DSL)) or wirelessly (for example, infrared, radio, and microwave). The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid State Disk (SSD)), or the like.

The embodiments of the present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct a computer or any other programmable data processing device to operate in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It should be noted that a person skilled in the art may make various modifications and variations to the embodiments of the present invention without departing from the scope of this application. This application is intended to cover these modifications and variations provided that they fall within the scope of protection defined by the following claims.

## Claims

1. A synchronization method, wherein the method comprises:
sending(301; 501), by a terminal, a first uplink signal to a network device on a supplementary uplink resource;
receiving(304; 504), by the terminal, indication information from the network device, wherein the indication information indicates a frequency offset value of the supplementary uplink resource; and
determining(304;504), by the terminal, the frequency offset value of the supplementary uplink resource based on the indication information, wherein the frequency offset value is used for the terminal to implement frequency synchronization with the supplementary uplink resource,
wherein the indication information is a frequency offset indicator value; and
wherein the method is **characterized in that** the
determining, by the terminal, the frequency offset value of the supplementary uplink resource based on the indication information comprises:
obtaining, by the terminal, frequency offset precision from the network device ; and
determining, by the terminal, the frequency offset value of the supplementary uplink resource based on the frequency offset precision and the frequency offset indicator value, wherein the frequency offset value is a product of the frequency offset precision and the frequency offset indicator value.

2. The method according to claim 1, wherein the first uplink signal is a random access signal; and
the receiving, by the terminal, indication information from the network device comprises:
receiving, by the terminal, a random access response, RAR, from the network device, wherein the RAR comprises the indication information.

3. The method according to claim 1, wherein the first uplink signal is an uplink reference signal; and
the receiving, by the terminal, indication information from the network device comprises:
receiving, by the terminal, downlink control information from the network device, wherein the downlink control information comprises the indication information.

4. The method according to any one of claims 1 to 3, wherein after the determining, by the terminal, the frequency offset value of the supplementary uplink resource based on the indication information, the method further comprises:
performing, by the terminal, frequency adjustment on the supplementary uplink resource by using the frequency offset value, and sending(305; 505) a second uplink signal on the adjusted supplementary uplink resource; or
performing, by the terminal, frequency domain precompensation on a second uplink signal by using the frequency offset value, and sending a frequency domain signal on the supplementary uplink resource.

5. The method according to any one of claims 1 to 4, wherein the supplementary uplink resource belongs to a licensed spectrum of a long term evolution LTE system.

6. A synchronization method, wherein the method comprises:
receiving(302;502), by a network device, a first uplink signal from a terminal on a supplementary uplink resource; and
sending(303;503), by the network device, indication information to the terminal based on the first uplink signal, wherein the indication information is used to indicate a frequency offset value of the supplementary uplink resource; and
sending, by the network device, frequency offset precision to the terminal;
wherein the indication information is a frequency offset indicator value, and wherein the frequency offset value is a product of the frequency offset precision and the frequency offset indicator value.

7. The method according to claim 6, wherein the first uplink signal is a random access signal; and
the sending, by the network device, indication information to the terminal comprises:
sending, by the network device, a random access response, RAR, to the terminal, wherein the RAR comprises the indication information.

8. The method according to claim 6, wherein the first uplink signal is an uplink reference signal; and
the sending, by the network device, indication information to the terminal comprises:
sending, by the network device, downlink control information to the terminal, wherein the downlink control information comprises the indication information.

9. The method according to any one of claims 6 to 8, wherein the supplementary uplink resource belongs to a licensed spectrum of a long term evolution LTE system.

10. An apparatus comprising means adapt to
perform the method according to any one of claims 1-5.

11. An apparatus comprising means adapt to
perform the method according to any one of claims 6-9.

12. A computer readable storage medium, wherein the storage medium stores an instruction, and when the instruction is run on a computer, the computer is enabled to perform the synchronization method according to any one of claims 1 to 5.

13. A computer readable storage medium, wherein the storage medium stores an instruction, and when the instruction is run on a computer, the computer is enabled to perform the synchronization method according to any one of claims 6 to 9.

## Patentansprüche

1. Synchronisationsverfahren, wobei das Verfahren umfasst:
Senden (301; 501), durch ein Endgerät, eines ersten Aufwärtsstreckensignals an eine Netzvorrichtung auf einer zusätzlichen Aufwärtsstreckenressource;
Empfangen (304; 504), durch das Endgerät, einer Anzeigeinformation von der Netzvorrichtung, wobei die Anzeigeinformation einen Frequenzversatzwert der zusätzlichen Aufwärtsstreckenressource angibt; und
Bestimmen (304; 504), durch das Endgerät, des Frequenzversatzwertes der zusätzlichen Aufwärtsstreckenressource basierend auf der Anzeigeinformation, wobei der Frequenzversatzwert verwendet wird, damit das Endgerät eine Frequenzsynchronisation mit der zusätzlichen Aufwärtsstreckenressource durchführt, wobei die Anzeigeinformation ein Frequenzversatz-Indikatorwert ist; und
wobei das Verfahren **dadurch gekennzeichnet ist, dass** das Bestimmen, durch das Endgerät, des Frequenzversatzwertes der zusätzlichen Aufwärtsstreckenressource basierend auf der Anzeigeinformation umfasst:
Erhalten, durch das Endgerät, einer Frequenzversatzgenauigkeit von der Netzvorrichtung; und
Bestimmen, durch das Endgerät, des Frequenzversatzwertes der zusätzlichen Aufwärtsstreckenressource basierend auf der Frequenzversatzgenauigkeit und dem Frequenzversatz-Indikatorwert, wobei der Frequenzversatzwert ein Produkt aus der Frequenzversatzgenauigkeit und dem Frequenzversatz-Indikatorwert ist.

2. Verfahren gemäß Anspruch 1, wobei das erste Aufwärtsstreckensignal ein Direktzugriffssignal ist; und
das Empfangen, durch das Endgerät, der Anzeigeinformation von der Netzvorrichtung umfasst:
Empfangen, durch das Endgerät, einer Direktzugriffsantwort ("Random Access Response", RAR) von der Netzvorrichtung, wobei die RAR die Anzeigeinformation umfasst.

3. Verfahren gemäß Anspruch 1, wobei das erste Aufwärtsstreckensignal ein Aufwärtsstreckenreferenzsignal ist; und
das Empfangen, durch das Endgerät, der Anzeigeinformation von der Netzvorrichtung umfasst:
Empfangen, durch das Endgerät, einer Abwärtsstreckensteuerinformation von der Netzvorrichtung, wobei die Abwärtsstreckensteuerinformation die Anzeigeinformation umfasst.

4. Verfahren gemäß einem der Ansprüche 1 bis 3, wobei nach dem Bestimmen, durch das Endgerät, des Frequenzversatzwertes der zusätzlichen Aufwärtsstreckenressource basierend auf der Anzeigeinformation das Verfahren ferner umfasst:
Durchführen, durch das Endgerät, einer Frequenzanpassung an der zusätzlichen Aufwärtsstreckenressource unter Verwendung des Frequenzversatzwertes und Senden (305; 505) eines zweiten Aufwärtsstreckensignals auf der angepassten zusätzlichen Aufwärtsstreckenressource; oder
Durchführen, durch das Endgerät, einer Frequenzbereich-Vorkompensation an einem zweiten Aufwärtsstreckensignal unter Verwendung des Frequenzversatzwertes und Senden eines Frequenzbereichssignals auf der zusätzlichen Aufwärtsstreckenressource.

5. Verfahren gemäß einem der Ansprüche 1 bis 4, wobei die zusätzliche Aufwärtsstreckenressource zu einem lizenzierten Spektrum eines LTE ("Long Term Evolution", Langzeitentwicklung) -Systems gehört.

6. Synchronisationsverfahren, wobei das Verfahren umfasst:
Empfangen (302; 502), durch eine Netzvorrichtung, eines ersten Aufwärtsstreckensignals von einem Endgerät auf einer zusätzlichen Aufwärtsstreckenressource; und
Senden (303; 503), durch die Netzvorrichtung, der Anzeigeinformation an das Endgerät basierend auf dem ersten Aufwärtsstreckensignal, wobei die Anzeigeinformation verwendet wird, um einen Frequenzversatzwert der zusätzlichen Aufwärtsstreckenressource anzugeben; und
Senden, durch die Netzvorrichtung, einer Frequenzversatzgenauigkeit an das Endgerät;
wobei die Anzeigeinformation ein Frequenzversatz-Indikatorwert ist und wobei der Frequenzversatzwert ein Produkt aus der Frequenzversatzgenauigkeit und dem Frequenzversatz-Indikatorwert ist.

7. Verfahren gemäß Anspruch 6, wobei das erste Aufwärtsstreckensignal ein Direktzugriffssignal ist; und
das Senden, durch die Netzvorrichtung, der Anzeigeinformation an das Endgerät umfasst:
Senden, durch die Netzvorrichtung, einer Direktzugriffsantwort ("Random Access Response", RAR) an das Endgerät, wobei die RAR die Anzeigeinformation umfasst.

8. Verfahren gemäß Anspruch 6, wobei das erste Aufwärtsstreckensignal ein Aufwärtsstreckenreferenzsignal ist; und
das Senden, durch die Netzvorrichtung, der Anzeigeinformation an das Endgerät umfasst:
Senden, durch die Netzvorrichtung, einer Abwärtsstreckensteuerinformation an das Endgerät, wobei die Abwärtsstreckensteuerinformation die Anzeigeinformation umfasst.

9. Verfahren gemäß einem der Ansprüche 6 bis 8, wobei die zusätzliche Aufwärtsstreckenressource zu einem lizenzierten Spektrum eines LTE ("Long Term Evolution", Langzeitentwicklung) -Systems gehört.

10. Einrichtung, die Mittel umfasst, die zum Ausführen des Verfahrens gemäß einem der Ansprüche 1-5 ausgelegt sind.

11. Einrichtung, die Mittel umfasst, die zum Ausführen des Verfahrens gemäß einem der Ansprüche 6-9 ausgelegt sind.

12. Computerlesbares Speichermedium, wobei das Speichermedium eine Anweisung speichert, und wenn die Anweisung auf einem Computer ausgeführt wird, der Computer befähigt wird, das Synchronisationsverfahren gemäß einem der Ansprüche 1 bis 5 durchzuführen.

13. Computerlesbares Speichermedium, wobei das Speichermedium eine Anweisung speichert, und wenn die Anweisung auf einem Computer ausgeführt wird, der Computer befähigt wird, das Synchronisationsverfahren gemäß einem der Ansprüche 6 bis 9 durchzuführen.

## Revendications

1. Procédé de synchronisation, dans lequel le procédé comprend les étapes suivantes :
envoyer (301 ; 501), par un terminal, un premier signal de liaison montante à un dispositif de réseau sur une ressource de liaison montante supplémentaire ;
recevoir (304 ; 504), par le terminal, des informations d'indication provenant du dispositif de réseau, dans lequel les informations d'indication indiquent une valeur de décalage de fréquence de la ressource de liaison montante supplémentaire ; et
déterminer (304 ; 504), par le terminal, la valeur de décalage de fréquence de la ressource de liaison montante supplémentaire sur la base des informations d'indication, dans lequel la valeur de décalage de fréquence est utilisée par le terminal pour mettre en oeuvre la synchronisation de fréquence avec la ressource de liaison montante supplémentaire,
dans lequel les informations d'indication sont une valeur d'indicateur de décalage de fréquence ; et
dans lequel le procédé est **caractérisé en ce que** la détermination, par le terminal, de la valeur de décalage de fréquence de la ressource de liaison montante supplémentaire sur la base des informations d'indication comprend :
l'obtention, par le terminal, de la précision de décalage de fréquence depuis le dispositif de réseau ; et
la détermination, par le terminal, de la valeur de décalage de fréquence de la ressource de liaison montante supplémentaire sur la base de la précision de décalage de fréquence et de la valeur de l'indicateur de décalage de fréquence, dans lequel la valeur de décalage de fréquence est le produit de la précision de décalage de fréquence et de la valeur de l'indicateur de décalage de fréquence.

2. Procédé selon la revendication 1, dans lequel le premier signal de liaison montante est un signal d'accès aléatoire ; et
la réception, par le terminal, d'informations d'indication en provenance du dispositif de réseau comprend :
la réception, par le terminal, d'une réponse d'accès aléatoire, RAR, en provenance du dispositif de réseau, dans lequel la RAR comprend les informations d'indication.

3. Procédé selon la revendication 1, dans lequel le premier signal de liaison montante est un signal de référence de liaison montante ; et
la réception, par le terminal, d'informations d'indication en provenance du dispositif de réseau comprend :
la réception, par le terminal, d'informations de commande de la liaison descendante en provenance du dispositif de réseau, dans lequel les informations de commande de la liaison descendante comprennent les informations d'indication.

4. Procédé selon l'une quelconque des revendications 1 à 3, dans lequel, après la détermination, par le terminal, de la valeur de décalage de fréquence de la ressource supplémentaire de liaison montante sur la base des informations d'indication, le procédé comprend en outre les étapes suivantes :
effectuer, par le terminal, un ajustement de fréquence sur la ressource de liaison montante supplémentaire en utilisant la valeur de décalage de fréquence, et envoyer (305 ; 505) un deuxième signal de liaison montante sur la ressource de liaison montante supplémentaire ajustée ; ou
effectuer, par le terminal, une précompensation dans le domaine fréquentiel sur un deuxième signal de liaison montante en utilisant la valeur de décalage de fréquence, et en envoyant un signal de domaine fréquentiel sur la ressource de liaison montante supplémentaire.

5. Procédé selon l'une quelconque des revendications 1 à 4, dans lequel la ressource de liaison montante supplémentaire appartient à un spectre sous licence d'un système à évolution à long terme, LTE.

6. Procédé de synchronisation, dans lequel le procédé comprend les étapes suivantes :
recevoir (302 ; 502), par un dispositif de réseau, un premier signal de liaison montante provenant d'un terminal sur une ressource de liaison montante supplémentaire ; et
envoyer (303 ; 503), par le dispositif de réseau, des informations d'indication au terminal sur la base du premier signal de liaison montante, dans lequel les informations d'indication sont utilisées pour indiquer une valeur de décalage de fréquence de la ressource de liaison montante supplémentaire ; et
envoyer, par le dispositif de réseau, une précision de décalage de fréquence au terminal ;
dans lequel les informations d'indication sont une valeur d'indicateur de décalage de fréquence, et dans lequel la valeur de décalage de fréquence est un produit de la précision de décalage de fréquence et de la valeur d'indicateur de décalage de fréquence.

7. Procédé selon la revendication 6, dans lequel le premier signal de liaison montante est un signal d'accès aléatoire ; et
l'envoi, par le dispositif de réseau, d'informations d'indication au terminal comprend :
l'envoi, par le dispositif de réseau, d'une réponse d'accès aléatoire, RAR, au terminal, dans lequel la RAR comprend les informations d'indication.

8. Procédé selon la revendication 6, dans lequel le premier signal de liaison montante est un signal de référence de liaison montante ; et
l'envoi, par le dispositif de réseau, d'informations d'indication au terminal comprend :
l'envoi, par le dispositif de réseau, d'informations de commande de liaison descendante au terminal, dans lequel les informations de commande de liaison descendante comprenant les informations d'indication.

9. Procédé selon l'une quelconque des revendications 6 à 8, dans lequel la ressource de liaison montante supplémentaire appartient à un spectre sous licence d'un système à évolution à long terme, LTE.

10. Appareil comprenant des moyens adaptés pour exécuter le procédé selon l'une quelconque des revendications 1 à 5.

11. Appareil comprenant des moyens adaptés pour exécuter le procédé selon l'une quelconque des revendications 6 à 9.

12. Support de stockage lisible par ordinateur, dans lequel le support de stockage stocke une instruction et, lorsque l'instruction est exécutée sur un ordinateur, l'ordinateur est activé pour exécuter le procédé de synchronisation selon l'une quelconque des revendications 1 à 5.

13. Support de stockage lisible par ordinateur, dans lequel le support de stockage stocke une instruction et, lorsque l'instruction est exécutée sur un ordinateur, l'ordinateur est activé pour exécuter le procédé de synchronisation selon l'une quelconque des revendications 6 à 9.
